# EUROPÄISCHE PATENTSCHRIFT

(11) **EP 2 085 174 B1**
(45) Veröffentlichungstag und Bekanntmachung des Hinweises auf die Patenterteilung: **23.01.2013**
(21) Anmeldenummer: 09001379.8
(22) Anmeldetag: 02.02.2009
(51) Int. Cl.: B23K 35/30, C21D 9/50, C22F 1/10, B23K 103/04, B23K 101/04

(54) **Verfahren zum Herstellen einer Schweißverbindung an Nickel legierten Stählen**
Method for manufacturing a welded connection on nickel alloyed steels
Procédé de fabrication d'une liaison soudée sur des aciers alliés au Nickel

(30) Priorität: 01.02.2008 DE 102008007275
(43) Veröffentlichungstag der Anmeldung: 05.08.2009
(73) Patentinhaber: EISENBAU KRÄMER mbH, 57223 Kreuztal (DE); Böhler Schweißtechnik Deutschland GmbH, 59067 Hamm (DE)
(72) Erfinder: Beissel, Jochem, 57271 Hilchenbach (DE); Reichel, Thilo, 57234 Wilnsdorf (DE); Adam, Werner, 40670 Meerbusch (DE)
(74) Vertreter: Fleck, Hermann-Josef

(56) Entgegenhaltungen:
- DE-A1- 2 942 856
- US-A- 3 970 447
- Anonymous: "Welding liquid natural gas tanks and vessels in 5% and 9% nickel steels"[Online] 2001, Seiten 1/4-4/4, XP002601446 Göteborg, Sweden ESAB AB Gefunden im Internet: URL:http://www-off-axis.fnal.gov/flare/tec hnical_papers/welding_tanks.pdf> [gefunden am 2010-09-19]

## Beschreibung

Die Erfindung bezieht sich auf ein Verfahren zum Herstellen einer Schweißverbindung an kaltzähen, Ni-legierten Stählen mit Schweißzusatzwerkstoffen.

Ein Verfahren zum Herstellen einer Schweißverbindung an kaltzähen Ni-legierten Stählen ist in der DE 29 42 856 A1 angegeben. Hierbei enthält ein Grundmetall 3,5 bis 9,5 Gew.-% Nickel neben weiteren Legierungsgehalten und es kommt ein Schweißdraht mit 8 bis 15 Gew.-% Nickel neben weiteren Bestandteilen zur Anwendung. Die Herstellung der Schweißnaht erfolgt mittels eines TIG-Schweißverfahrens.

In der DE 2 106 691 A ist ein ferritischer Nickelstahl, der sich insbesondere als Zusatzwerkstoff beispielsweise beim MIG-Schweißen von Stählen mit beispielsweise 9 % Nickel eignet, die bei tiefen Temperaturen eingesetzt werden, angegeben. Der ferritische Nickelstahl soll sich als Zusatzwerkstoff zum Schweißen kaltzäher Stähle eignen, wobei der ferritische Stahl an Luft erschmolzen werden kann und 7 bis 13 % Nickel, höchsten 0,45 % Mangan, höchstens 0,09 % Kohlenstoff, höchstens 0,15 % Silizium, höchsten 0,05 % Aluminium, bis 0,1 % Titan, bis 0,1 % Niob, höchstens 0,01 % Phosphor und höchstens 0,01 % Schwefel, Rest einschließlich erschmelzungsbedingter Verunreinigungen Eisen enthält, dessen Kohlenstoffgehalt jedoch mindestens 0,05 % beträgt, wenn der Mangangehalt 0,3 % übersteigt.

In der DE 1 808 014 A ist eine Schweißelektrode, insbesondere zum Schweißen von härtbarem, korrosionsbeständigem Stahl gezeigt.

Die DE 1 508 310 A zeigt eine Schweißelektrode für das Ausbilden eines Schweißmetalls mit hohen mechanischen Eigenschaften und hoher Widerstandsfähigkeit gegenüber Korrosion und Abrieb.

In der DE 1 815 274 A ist eine Elektrode für das Schweißen rostbeständiger Stähle offenbart.

Zur Herstellung von Schweißverbindungen unter Verwendung von Schweißzusätzen werden üblicherweise Zusätze verwendet, die in der chemischen Zusammensetzung dem Grundwerkstoff artgleich/artähnlich sind. Dagegen finden in Ausnahmefällen auch artfremde, zumeist überlegierte Schweißzusätze Berücksichtigung. Eine optimale Anpassung hinsichtlich relevanter Werkstoffeigenschaften ist bei diesen artfremden Schweißverbindungen vielfach nicht oder nur begrenzt möglich.

So werden für kaltzähe, ferritische, Ni-legierte Grundwerkstoffe zum Herstellen von Schweißverbindungen in der Regel artfremde, üblicherweise Ni-Basis-Zusätze berücksichtigt, die zwar den mechanisch technologischen Mindestanforderungen der Grundwerkstoffe zum Teil genügen, deren Schweißgüter aber im Vergleich zu den kaltzähen, ferritischen, insbesondere 9 bis 12 % Ni-legierten Grundwerkstoffen zum Teil erhebliche Unterschiede bei den physikalischen Eigenschaften, wie Wärmeausdehnungskoeffizient, Wärmeleitfähigkeit und Streckgrenze aufweisen.

Der Erfindung liegt die Aufgabe zugrunde, ein Verfahren zum Herstellen einer Schweißverbindung an einem Grundwerkstoff der genannten Werkstoffgruppe bereitzustellen, mit dem die Anforderungen des Grundwerkstoffs im Bereich der Schweißnaht bei verschiedenen Schweißverfahrenstechnologien besser erfüllt werden.

Diese Aufgabe wird mit den Merkmalen des Anspruches 1 gelöst. Hierbei ist vorgesehen, dass sich der Schweißzusatz hinsichtlich des Chromäquivalents um höchstens ± 1 % und hinsichtlich des Nickeläquivalents um höchstens ± 2 % unterscheidet, wobei das Schweißgut weiterhin durch die Grenzwerte 0 % ≤ Chromäquivalent ≤ 3 % und 2,5 % ≤ Nickel-Äquivalent ≤ 17,5 % eingeschränkt wird.

Das Verfahren zum Herstellen einer Schweißverbindung an kaltzähen, insbesondere 9 bis 12 % Ni-legierten Stählen mit Schweißzusatzwerkstoffen wird dabei insbesondere in der Weise ausgeführt, dass sich der Schweißzusatz hinsichtlich des Chromäquivalents nach der Berechnungsformel Cr+Mo+1,5 Si+0,5 Nb um höchstens ± 1 % und hinsichtlich des Nickeläquivalents nach der Berechnungsformel Ni+30 (C+N)+0,5 Mn um höchstens ± 2 % von dem des Grundwerkstoffs, berechnet unter Zugrundelegung der realen Analysenwerte, unterscheidet. Unter Berücksichtigung der Gasgehalte kann über einen Z-Faktor die Grundwerkstoff- und/oder Schweißzusatzlegierung aufeinander abgestimmt werden. Mit der Berücksichtigung der Gasgehalte kann für den Schweißzusatz und dem Anpassungsfaktor als Z-Faktor zwischen Grundwerkstoff und Schweißzusatzwerkstoff folgende Bezeichnung hergestellt werden:
Z-Grundwerkstoff - Zschweißzusatzwerkstoff <0,5.

In umfangreichen Untersuchungen haben sich folgende optimalen Beziehungen herausgestellt:
ZGrundwerkstoff = %Ni - 30 x % 02 -10 x % N2 -10 x % H2,
wobei ebenso
ZSchweißzusatz = % Ni - 30 x % 02 -10 x % N2 - 10 x % H2.

Aus Untersuchungen der Erfinder hat sich ergeben, dass mit derartigem artgleichem Schweißzusatzwerkstoff in Verbindung mit den genannten Grundwerkstoffen vergleichbare mechanisch-technologische Eigenschaften wie bei überlegierten Schweißzusatzwerkstoffen, jedoch besser an den Grundwerkstoff angepasste physikalische

Eigenschaften, insbesondere hinsichtlich Wärmeausdehnung, Wärmeleitfähigkeit und besonders Streckgrenze, im Bereich der Schweißverbindung ergeben. Damit wird z.B. ein verbessertes Ausdehnungsverhalten, besonders bei Tieftemperaturanwendungen, erreicht, wobei das Ausdehnungsverhalten im Bereich des Schweißgutes dem des Grundwerkstoffes entspricht.

Vorteilhafte Eigenschaften des Verfahrens und des hergestellten Produkts ergeben sich ferner dadurch, dass an einem zu verschweißenden Grundwerkstoff aus der Stoffklasse der kaftzähen, ferritischen Ni-legierten Stähle der den Legierungsgehalten Ni 8,5 bis 10 %, Si <0,35 %, Mn<0,8 %, (Cr+Mo+Cu) < 0,5 %, alle Angaben in Gew. %, genügt - wie beispielsweise dem X8Ni9 und dem X10Ni9 - mit Schweißzusatzwerkstoffen gegebenenfalls mit Vor- und/oder Nachbehandlungsschritten, wobei ein Schweißgut mittels Schweißens eingebracht wird und wobei sich der Schweißzusatz hinsichtlich des Chromäquivalents nach der Berechnungsformel Cr+Mo+1,5 Si+0,5 Nb um höchstens ± 1 % und hinsichtlich des Nickeläquivalents nach der Berechnungsformel Ni+30(C+N)+0,5 Mn um höchstens ± 2 % von dem des Grundwerkstoffes, berechnet unter Zugrundelegung realer Analysewerte unterscheidet.

Die Vorteile kommen insbesondere auch dann zum Tragen, wenn die Schweißverbindung an ferritischen kaltzähen nickellegierten Stählen hergestellt wird. Nähere Untersuchungen der Erfinder haben ergeben, dass der artgleiche Schweißzusatzwerkstoff gerade auch dann Vorteile bietet, wenn vorgesehen ist, dass als zu verschweißender legierter Stahl ein 9 bis 12 %-Ni-Stahl verwendet wird.

Zu Vorteilen tragen auch die Maßnahmen bei, dass unter Berücksichtigung der Gasgehalte folgende Beziehung, formuliert in einem Z-faktor, gültig ist: ZGrundwerkstoff- ZSchweißzusatz < 0,5 mit ZGrundwerkstoff = % Ni - 30 x % 02 - 10 x % N2 - 10 x % H2 und ebenso ZSchweißzusatz = % Ni - 30 x % 02 - 10 x % N2-10x%H2.

Weitere vorteilhafte Maßnahmen bestehen darin, dass im Schweißgut die Obergrenzen für die Elemente H₂ <20 ppm, N₂ < 220 ppm und O₂ < 320 ppm nicht überschritten werden und dass weiterhin die Gesamtmenge der vorgenannten Gaskomponenten entsprechend der Formel H₂ + N₂ + O₂ < 350 ppm begrenzt wird. Insbesondere ist dabei das Verfahren so ausgestaltet, dass die Grenzwerte der einzelnen Gasanteile im Schweißgut durch eine gleichwertige Limitierung des Schweißzusatzes erreicht werden, wobei berücksichtigt wird, dass die angewendete Schweißverfahrenstechnologie und die ausgewählten Schweißhilftstoffe, insbesondere Schweißschutzgase, Pulver keine weiteren Zuschläge in den Gasgehalten über die genannten Grenzen, Wasserstoff max. 20 ppm, Stickstoff max. 220 ppm und Sauerstoff max. 320 ppm, hinausgehend verursachen.

Ferner haben Untersuchungen der Erfinder ergeben, dass an sich mögliche negative Einflüsse des artgleichen Zusatzwerkstoffes bei der Bildung der Schweißverbindung gegenüber einer Überlegierung an Legierungselementen dadurch beseitigt werden, dass nach dem Schweißvorgang das Gefüge zumindest in der und um die Schweißnaht einer gezielten abgestimmten Wärmenachbehandlung in der Weise unterzogen wird, dass die Grenzwerte der einzelnen Gasanteile im Schweißgut durch eine gleichwertige Limitierung des Schweißzusatzes erreicht werden, wobei berücksichtigt wird, dass die angewendete Schweißverfahrenstechnologie und die ausgewählten Schweißhilfsstoffe, insbesondere Schweißschutzgase, Pulver keine weiteren Zuschläge in den Gasgehalten über die genannten Grenzen, Wasserstoff max. 20 ppm, Stickstoff max. 220 ppm und Sauerstoff max. 320 ppm, hinausgehend verursachen.

Insbesondere auch bei Tieftemperaturanwendungen wird eine hohe Stabilität der legierten Stähle auch im Bereich der Schweißverbindung dadurch sicher gestellt, dass die Wärmenachbehandlung so ausgelegt wird, dass der Schweißnahtbereich und die Wärmeeinflusszone auf den gleichen Wärmeausdehnungskoeffizienten wie der zu verschweißende legierte Stahl abgestimmt wird.

Weitere Vorteile ergeben sich dadurch, dass die Wärmenachbehandlung so ausgeführt wird, dass der Schweißnahtbereich und die Wärmeeinflusszone auf die gleiche Wärmeleitfähigkeit wie der zu verschweißende legierte Stahl abgestimmt werden.

Im Zusammenhang mit der Wärmenachbehandlung insbesondere gemäß den Ansprüchen 7 bis 10 ergeben sich Qualitätsvorteile auch dadurch, dass die physikalischen Eigenschaften der Schweißverbindung aufgrund der Legierungsgleichheit zwischen Schweißzusatz und Grundwerkstoff übereinstimmen.

Vorteilhaft umfasst die Herstellung die Maßnahmen, dass das Ausgangsmaterial ohne oder mit Wärmenachbehandlung nach dem Walzen verarbeitet wird. Üblicherweise werden die Bleche nach dem Walzvorgang aufwendig wärmebehandelt. Diese Wärmebehandlung kann entfallen, da sie am fertigen Bauteil (Rohr) nachgeholt wird. Vorteilhaft ist dabei, dass die Kosten des Vormaterial und die Lieferzeit verringert werden. Zudem ist das Blech in diesem Zustand leichter ein- und umzuformen, was den Rohrherstellungsprozess vereinfacht.

Das hergestellte Produkt, insbesondere Rohr, erhält auch dadurch bessere Eigenschaften, dass die Wärmenachbehandlung so ausgelegt ist, dass Eigenspannungen im Rohrkörper und in der Schweißnaht gegenüber dem Rohrherstellungszustand reduziert werden.

Eine vorteilhafte Anwendung des Verfahrens ergibt sich beim Verschweißen von Rohren z.B. aus 9 bis 12 %-Ni-Stahl oder beim Verschweißen von Behältern.

Gemäß dem erfindungsgemäßen Verfahren kommen bei der Herstellung der Schweißverbindung an den genannten Grundwerkstoffen, beispielsweise von 9 %-Ni-Stählen, also nicht, wie üblich, überlegierte Schweißzusätze zur Anwendung, sondern artgleiche bzw. artähnliche Schweißzusatzwerkstoffe. Dies hat den Vorteil, dass durch die zumindest weitgehend artgleichen Werkstoffe eine Verbindung entsteht, die sich werkstofftechnisch praktisch nicht von dem Grundwerkstoff unterscheidet. Bei der Anwendung auf diese Weise mit einer Schweißverbindung versehener Bauteile ergibt sich in der Praxis der Vorteil, dass die Ausdehnungskoeffizienten zwischen Grundwerkstoff und Schweißnaht gleich sind, und es unter Betriebsbedingungen, insbesondere auch tiefen Temperaturen z. B. im Tieftemperaturbereich um - 196° C bzw. hohen Temperaturunterschieden, nicht zu Verspannungen vor allem auch in den Bereichen in der und um die Schweißverbindung kommt. Erfindungsgemäß wird eine gezielte, abgestimmte, d.h. werkstoffspezifische Wärmenachbehandlung zumindest im Bereich der Fügestelle vorgenommen, durch die die positiven Eigenschaften des Grundwerkstoffes, beispielsweise eines 9 %-Ni-Stahls, auch in der Schweißnaht erreicht werden. Mit der beschriebenen Kombination aus der Verschweißung mit artgleichen Zusatzwerkstoffen und gezielter nachfolgender Wärmebehandlung lassen sich bei den genannten Grundwerkstoffen hochwertige Schweißverbindungen herstellen, die sonst nur mit überlegierten Schweißzusätzen erreicht worden sind. Mit der beschriebenen Kombination aus artgleichem Schweißzusatz und gezielter Wärmenachbehandlung lassen sich hochwertige Schweißverbindungen herstellen, wie sie mit überlegierten Schweißzusätzen nur teilweise erreichbar sind. Hinzu kommt, dass durch die gezielte Wärmebehandlung auch die Eigenspannungen im Bereich der Naht abgebaut werden und dadurch besonders bei cryogenen Temperaturen höhere Belastungen des Bauteils zulässig werden.

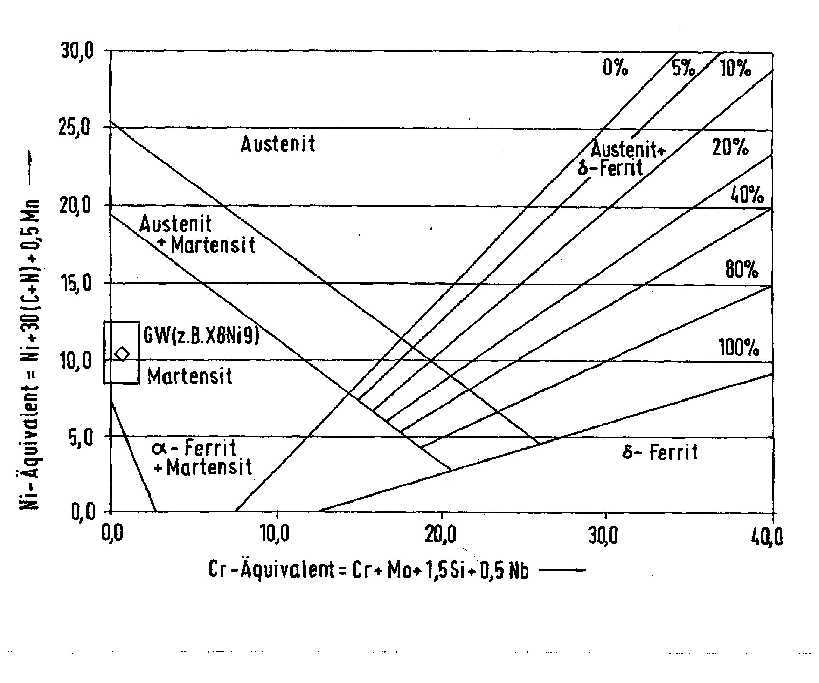

Das Verfahren wird anhand von Ausführungsbeispielen unter Bezugnahme auf die Zeichnung näher erläutert.

Die Figur zeigt ein sogenanntes Schaeffler-Diagramm. Anhand dieses Diagramms wird im Folgenden der Begriff der Artgleichheit des Schweißzusatzes bzw. des Schweißgutes näher erläutert.

Unter artgleichem Schweißzusatz bzw. Schweißgut in Relation zum Grundwerkstoff soll im Folgenden verstanden werden, dass die Chrom- und Nickeläquivalente des Schweißzusatzwerkstoffes oder des Schweißgutes von denen des Grundwerkstoffes nach der Berechnungsformel Cr+Mo+1,5 Si+0,5 Nb um höchstens oder weniger als jeweils ± 1,0 % für das Chromäquivalent und nach der Berechnungsformel Ni+30(C+N)+0,5 Mn um höchstens oder weniger als ± 2,0% für das Nickeläquivalent abweichen. Im Diagramm ist dies exemplarisch für einen Grundwerkstoff X8Ni9 angedeutet. Die ausgefüllte Raute bezeichnet dabei die Lage des Grundwerkstoffes gemäß der angegebenen Summenformeln für das Chrom- und Nickeläquivalent unter Verwendung einer vorgegebenen Analyse der Grundwerkstoffzusammensetzung und das Rechteck kennzeichnet den Bereich des hier als artgleich bezeichneten Schweißzusatzwerkstoffs/Schweißgutes unter Anwendung der Regel, dass weder das Chrom-Äquivalent um mehr als ± 1% noch das Nickel-Äquivalent um mehr als ± 2 % von der Lage des Grundwerkstoffes abweichen.

Des Weiteren ist das Verfahren vorteilhaft so ausgelegt, dass im Schweißgut die Obergrenzen für die Elemente H₂ < 20 ppm, N₃ < 220 ppm und O₂ < 320 ppm nicht überschritten werden, wobei weiterhin die Gesamtmenge der vorgenannten Gaskomponenten begrenzt ist entsprechend der Formel H₂ + N₂ + O₂ < 350 ppm.

## Patentansprüche

1. Verfahren zum Herstellen einer Schweißverbindung an einem Grundwerkstoff aus der Stoffklasse der kaltzähen Ni-legierten Stähle mit Schweißzusatzwerkstoffen, wobei ein Schweißgut mittels Schweißens eingebracht wird und das Schweißgut durch die Grenzwerte 0 % ≤ Chromäquivalent ≤ 3 % und 2,5 % ≤ Nickel-Äquivalent ≤ 17,5 % eingeschränkt wird, wobei ferner
- der Schweißzusatz sich hinsichtlich des Chromäquivalents nach der Berechnungsformel Cr+Mo+1,5 Si+0,5 Nb um höchstens ± 1 % und hinsichtlich des Nickeläquivalents nach der Berechnungsformel Ni+30(C+N)+0,5 Mn um höchstens ± 2 % vom Grundwerkstoff unterscheidet,
- die Gasgehalte von Schweiß- und Grundwerkstoff gemäß der Formel: ZGrundwerkstoff- ZSchweißzusatz <0,5, mit ZGrundwerkstoff = % Ni - 30 × % O₂ - 10 × % N₂ - 10 × % H₂ und ZSchweißzusatz = % Ni-30 × % O₂ - 10 x % N₂ - 10x % H₂, aufeinander abgestimmt werden und
- die Schweißnaht einer Wärmenachbehandlung in der Weise unterzogen wird, dass keine Zuschläge in den Gasgehalten des Schweißgutes von H₂ max. 20ppm, N₂ max. 220 ppm und O₂ max. 320 ppm verursacht werden.

2. Verfahren nach Anspruch 1, insbesondere Verfahren zum Herstellen einer Schweißverbindung an einem zu verschweißenden Grundwerkstoff aus der Stoffklasse der kaltzähen, ferritischen Ni-legierten Stähle der den Legierungsgehalten Ni 8,5 bis 10 %, Si <0,35 %, Mn<0,8 %, (Cr+Mo+Cu) < 0,5 %, alle Angaben in Gew. %, genügt - wie beispielsweise dem X8Ni9, dem X7Ni9 und dem X10Ni9 - mit Schweißzusatzwerkstoffen gegebenenfalls mit Vor- und/oder Nachbehandlungsschritten, wobei ein Schweißgut mittels Schwei-βens eingebracht wird.

3. Verfahren nach einem der vorhergehenden Ansprüche,
**dadurch gekennzeichnet,**
**dass** die Schweißverbindung an ferritischen kaltzähen Ni-legierten Stählen, insbesondere 9 bis 12 %-igen Ni-legierten Stählen, hergestellt wird.

4. Verfahren nach Anspruch 1 oder 2,
**dadurch gekennzeichnet,**
**dass** im Schweißgut die Obergrenzen für die Elemente H₂ <20 ppm, N₂ < 220 ppm und O₂ < 320 ppm nicht überschritten werden und
**dass** weiterhin die Gesamtmenge der vorgenannten Gaskomponenten entsprechend der Formel H₂ + N₂ + O₂ < 350 ppm begrenzt wird.

5. Verfahren nach Anspruch 4,
**dadurch gekennzeichnet,**
**dass** die Grenzwerte der einzelnen Gasanteile im Schweißgut durch eine gleichwertige Limitierung des Schweißzusatzes erreicht werden, wobei berücksichtigt wird, dass die angewendete Schweißverfahrenstechnologie und die ausgewählten Schweißhilfsstoffe, insbesondere Schweißschutzgase, Pulver, keine weiteren Zuschläge in den Gasgehalten über die genannten Grenzen, Wasserstoff max. 20 ppm, Stickstoff max. 220 ppm und Sauerstoff max. 320 ppm, hinausgehend verursachen.

6. Verfahren nach einem der vorhergehenden Ansprüche,
**dadurch gekennzeichnet,**
**dass** nach dem Schweißvorgang das Gefüge durch eine auf die Grundwerkstoff- und die Schweißnahtlegierung abgestimmte Wärmenachbehandlung durch Normalisieren bei Temperaturen von 750 bis 850° C mit anschließendem Abschrecken mit Wasser oder Luft und Anlassen auf Temperaturen von 550 bis 650° C unterzogen wird und
**dass** im Bereich der Schweißverbindung die mechanisch-technologischen Gefügeeigenschaften wie Festigkeit, Streckgrenze, Streckgrenzenverhältnis und Zähigkeit des Grundwerkstoffes eingestellt werden.

7. Verfahren nach Anspruch 6,
**dadurch gekennzeichnet,**
**dass** die Wärmenachbehandlung so ausgelegt wird, dass der Schweißnahtbereich und die Wärmeeinflusszone auf den gleichen Wärmeausdehnungskoeffizienten wie der zu verschweißende legierte Stahl abgestimmt wird.

8. Verfahren nach Anspruch 6,
**dadurch gekennzeichnet,**
**dass** die Wärmenachbehandlung so ausgeführt wird, dass der Schweißnahtbereich und die Wärmeeinflusszone auf die gleiche Wärmeleitfähigkeit wie der zu verschweißende legierte Stahl abgestimmt werden.

9. Verfahren nach einem der Ansprüche 6 bis 8,
**dadurch gekennzeichnet,**
**dass** die Wärmenachbehandlung so ausgelegt ist, dass Eigenspannungen im Rohrkörper und in der Schweißnaht gegenüber dem Rohrherstellungszustand reduziert werden.

10. Anwendung des Verfahrens nach einem der vorherigen Ansprüche beim Verschweißen von Rohren.

11. Anwendung des Verfahrens nach einem der Ansprüche 1 bis 9 beim Verschweißen von Behältern.

## Claims

1. A method for manufacturing a welded connection on a base material selected from the class of cold-resistant nickel alloyed steels having welding filler materials, wherein a weld metal is introduced by means of welding, and the weld metal is restricted by the limit values of 0% ≤ chromium equivalent ≤ 3% and of 2.5% ≤ nickel equivalent ≤ 17.5%, and further wherein
- the welding filler differs from the base material by at most ± 1% with regard to the chromium equivalent in accordance with the calculation formula Cr + Mo + 1.5 Si + 0.5 Nb and by at most ± 2% with regard to the nickel equivalent in accordance with the calculation formula Ni + 30 (C + N) + 0.5 Mn;
- the gas contents of the welding material and base material are adapted to one another in accordance with the formula: Z base material - Z welding filler < 0.5%, where Z base material = % Ni -30 x % O₂ - 10 x % N₂ - 10 x % H₂, and Z welding filler = % Ni - 30 x % O₂ - 10 x % N₂- 10 x % H₂; and
- the weld seam is subjected to a thermal posttreatment in such a manner that no additions in the gas contents of the weld metal of a maximum of 20 ppm for H₂, a maximum of 220 ppm for N₂, and a maximum of 320 ppm for O₂ are brought about.

2. The method according to claim 1, in particular a method for manufacturing a welded connection on a base material selected from the class of cold-resistant ferritic nickel alloyed steels that satisfies the alloy contents of from 8.5 to 10% Ni, < 0.35% Si, < 0.8% Mn, and < 0.5% (Cr + Mo + Cu), all expressed in weight percent - such as X8Ni9, X7Ni9 and X10Ni9 - having welding filler materials. optionally with pre- and/or posttreatment steps, wherein a weld metal is introduced by means of welding.

3. The method according to one of the foregoing claims,
**characterized in that**
the welded connection is manufactured on ferritic cold-resistant nickel alloyed steels, in particular 9 to 12% nickel alloyed steels.

4. The method according to claim 1 or 2,
**characterized in that**
in the weld metal, the upper limits for the elements H₂ of < 20 ppm, N₂ of < 220 ppm, and O₂ of < 320 ppm are not exceeded, and
that further, the total quantity of the aforementioned gas components is limited in accordance with the formula H₂ + N₂ + O₂ < 350 ppm.

5. The method according to claim 4,
**characterized in that**
the limit values of the individual gas components in the weld metal are attained by means of an equivalent limitation of the welding filler, taking into account the fact that the welding process technology employed and the selected auxiliary welding materials, in particular shielding gases and powder, do not bring about any further additions in the gas contents beyond the stated limits for hydrogen of a maximum of 20 ppm, for nitrogen of a maximum of 220 ppm, and for oxygen of a maximum of 320 ppm.

6. The method according to one of the foregoing claims,
**characterized in that**
after the welding operation, the structure is subjected to a thermal posttreatment adapted to the base material and to the weld seam alloy by normalization at temperatures of 750 to 850 °C, with ensuing quenching with water or air and annealing to temperatures of 550 to 650°C; and
that in the vicinity of the welded connection, the mechanical-technological structural properties, such as strength, apparent limit of elasticity, elasticity ratio, and toughness of the base material, are adjusted.

7. The method according to claim 6,
**characterized in that**
the thermal posttreatment is designed such that the weld seam vicinity and the heat influence zone are adapted to the same coefficients of thermal expansion as the alloyed steel that is to be welded.

8. The method according to claim 6,
**characterized in that**
the thermal posttreatment is performed such that the weld seam vicinity and the heat influence zone are adapted to the same thermal conductivity as the alloyed steel that is to be welded.

9. The method according to one of claims 6-8,
**characterized in that**
the thermal posttreatment is designed such that internal stresses in the pipe body and in the weld seam are reduced, compared to the manufactured state of the pipe.

10. Application of the method according to one of the foregoing claims in the welding of pipes.

11. Application of the method according to one of claims 1-9 in the welding of containers.

## Revendications

1. Procédé de réalisation d'une liaison soudée sur un matériau de base appartenant à la classe de matières des aciers tenaces à froid alliés au nickel avec des matériaux d'apport, dans lequel un métal fondu est apporté par soudage et le métal fondu est limité par les valeurs limites 0 % ≤ équivalent chrome ≤ 3 % et 2,5 % ≤ équivalent nickel ≤ 17,5 %, et dans lequel
- le matériau d'apport se différencie du matériau de base au maximum de ± 1 % en ce qui concerne l'équivalent chrome selon la formule de calcul Cr+Mo+1,5 Si+0,5 Nb et au maximum de ± 2 % en ce qui concerne l'équivalent nickel selon la formule de calcul Ni+30(C+N)+0,5 Mn,
- les teneurs en gaz des matériaux de soudage et de base sont accordées l'une à l'autre selon la formule Zmatériau de base-Zmatériau d'apport < 0,5, avec Zmatériau de base = % Ni - 30 x % O₂ - 10 x % N₂ - 10 x % H₂ et Zmatériau d'apport = % Ni - 30 x % O₂ - 10 x % N₂ - 10 x % H₂ et
- la soudure est soumise à un traitement thermique postérieur de manière à ce qu'aucune augmentation dans les teneurs en gaz du métal fondu de 20 ppm max. de H₂, 220 ppm max. de N₂ et 320 ppm max. d'O₂ ne soit provoquée.

2. Procédé selon la revendication 1, en particulier procédé pour réaliser une liaison soudée sur un matériau de base à souder appartenant à la classe de matières des aciers ferritiques tenaces à froid alliés au nickel et qui satisfait aux teneurs en alliage Ni 8,5 à 10 %, Si < 0,35 %, Mn < 0,8 %, (Cr+Mo+Cu) < 0,5 %, toutes les indications en % en poids, - comme par exemple le X8Ni9, le X7Ni9 et le X10Ni9
- avec des matériaux d'apport, le cas échéant avec des étapes de traitement préalable et/ou postérieur, un métal fondu étant apporté par soudage.

3. Procédé selon une des revendications précédentes,
**caractérisé en ce**
**que** la liaison soudée est réalisée sur des aciers ferritiques tenaces à froid alliés au nickel, en particulier des aciers alliés au nickel titrant de 9 à 12 % de Ni.

4. Procédé selon la revendication 1 ou 2,
**caractérisé en ce**
**que** les limites supérieures pour les éléments H₂ < 20 ppm, N₂ < 220 ppm et O₂ < 320 ppm ne sont pas dépassées dans le métal fondu et
**que** la quantité totale des composants gazeux précités est en outre limitée selon la formule H₂ + N₂ + O₂ < 350 ppm.

5. Procédé selon la revendication 4,
**caractérisé en ce**
**que** les valeurs limites des différentes proportions gazeuses dans le métal fondu sont atteintes par une limitation équivalente du matériau d'apport, en tenant compte que le procédé de soudage utilisé et les auxiliaires de soudage sélectionnés, en particulier gaz inertes de soudage, poudres, ne provoquent pas d'augmentations supplémentaires des teneurs en gaz allant au-delà des limites mentionnées, hydrogène 20 ppm max., azote 220 ppm max. et oxygène 320 ppm max.

6. Procédé selon une des revendications précédentes,
**caractérisé en ce**
**qu'**après l'opération de soudage, la structure est soumise à des températures de 550 à 650 °C par un traitement thermique postérieur adapté au matériau de base et à l'alliage de soudure par normalisation à des températures de 750 à 850 °C suivie d'une trempe à l'eau ou à l'air et revenu et
**que** les caractéristiques mécano-technologiques de la structure telles que résistance mécanique, limite d'élasticité, rapport de limite d'élasticité et ténacité du matériau de base sont réglées dans la zone de la liaison soudée.

7. Procédé selon la revendication 6,
**caractérisé en ce**
**que** le traitement thermique postérieur est conçu de façon que la zone de la soudure et la zone d'influence de la chaleur soient accordées aux mêmes coefficients de dilatation thermique que l'acier allié à souder.

8. Procédé selon la revendication 6,
**caractérisé en ce**
**que** le traitement thermique postérieur est réalisé de façon que la zone de la soudure et la zone d'influence de la chaleur soient accordées à la même conductibilité thermique que l'acier allié à souder.

9. Procédé selon une des revendications 6 à 8,
**caractérisé en ce**
**que** le traitement thermique postérieur est conçu de façon à réduire les contraintes internes dans le corps de tube et dans la soudure par rapport à l'état de fabrication du tube.

10. Utilisation du procédé selon une des revendications précédentes pour le soudage de tubes.

11. Utilisation du procédé selon une des revendications 1 à 9 pour le soudage de cuves.
